# NEUE EUROPÄISCHE PATENTSCHRIFT

(11) **EP 0 174 560 B2**
(45) Veröffentlichungstag und Bekanntmachung des Hinweises auf die Entscheidung über den Einspruch: **27.10.1993**
(45) Hinweis auf die Patenterteilung: 10.08.1988
(21) Anmeldenummer: 85110895.1
(22) Anmeldetag: 29.08.1985
(51) Int. Cl.: B60K 17/10, F16H 47/02

(54) **Fahr-Antriebsvorrichtung für Maschinen und Fahrzeuge, bevorzugt für Baufahrzeuge wie Radlader**
Propulsion device for machines and vehicles, especially for construction vehicles, e.g. a shovel loader
Dispositif de propulsion pour machines et véhicules, de préférence pour véhicules de construction, comme des pelles automotrices

(30) Priorität: 12.09.1984 DE 3433494
(43) Veröffentlichungstag der Anmeldung: 19.03.1986
(73) Patentinhaber: Hydromatik GmbH, 89275 Elchingen (DE)
(72) Erfinder: Reistle, Wolfgang, D-7907 Langenau (DE); Wachs, Ewald, D-7901 Illerkirchen (DE)
(74) Vertreter: Körber, Wolfhart, Dr.rer.nat.

(56) Entgegenhaltungen:
- WO-A-84/01419
- DE-A- 1 580 249
- DE-A- 2 307 550
- DE-A- 2 652 976
- DE-A- 2 933 527
- DE-B- 2 237 595
- DE-C- 2 227 796
- DE-C- 2 757 191
- GB-A- 1 590 981

## Beschreibung

Die Erfindung bezieht sich auf eine Antriebsvorrichtung. z. B. für den Fahrantrieb bei Radladern, die aus einem Antriebsmotor z. B. Verbrennungsmotor und einem von diesem angetriebenen hydrostatischen Getriebe besteht, dem zur Vergroßerung des Geschwindigkeitsbereichs ein Schaltgetriebe nachgeordnet ist. Bei einer bekannten Bauart ist das hydrostatische Getriebe in Anhängigkeit von der Drehzahl des Antriebsmotors leistungsgeregelt, um eine günstige Übertragung der Antriebskraft zu gewährleisten. Hierzu dient eine Verstelleinrichtung für das hydrostatische Getriebe, wie sie im deutschen Patent 22 47 437 beschrieben und dargestellt ist. Eine willkürliche Verstellung des hydrostatischen Getriebes, d. h., eine willkürliche Verstellung seiner Ausgangsdrehzahl ist bei der bekannten Bauart unabhängig von der Drehzahl des Antriebsmotors nicht möglich.

Infolgedessen bedarf es bei der bekannten Bauart einer Änderung der Antriebsmotordrehzahl, um das hydrostatische Getriebe an die durch die Schaltstufe bedingte Drehzahländerung anzupassen. Eine solche Drehzahlanpassung ist nicht nur deshalb nachteilig, weil sie eine hohe Aufmerksamkeit und Einfühlungsvermögen von der Bedienungsperson erfordert, sondern weil sie auch zu einem hohen Kraftstoffverbrauch und vorzeitigem Verschleiß führt

Darüberhinaus ergeben sich insbesondere bei verhältnismäßig großer Lastübertragung, wie es bei Baufahrzeugen, z.B. Radladern, der Fall ist, Schalt-und Betriebsschwierigkeiten. die durch die vorhandenen Schwungmassen bei gleichzeitigerverhältnismä- ßig großer Lastübertragung hervorgerufen werden. Ein Fahrantrieb in der bekannten Bauart für einen Radlader läßt sich deshalb praktisch nur bei Stillstand der Getriebeeinheit schalten.

Die bekannte Bauart ist insbesondere dann unzureichend, wenn der vorhandene Antriebsmotor mehrere Antriebsfunktionen gleichzeitig erfüllt, was bei Baufahrzeugen meistens gegeben ist. In einem solchen Fall ist durch zusätzliche Bauteile und Vorrichtungen dafür zu sorgen, daß die vom Antriebsmotor aufgrund höherer Drehzahlen (beim Herunterschalten) erbrachte Leistung den weiteren Verbrauchern nicht übertragen wird, weil diese sie beispielsweise nicht ausnutzen können. Andererseits würde durch eine Herabsetzung der Antriebsmotordrehzahl (beim Hochschalten) die Antriebsleistung auch für die anderen gleichzeitig angetriebenen Aggregate verringert werden, wodurch der Antrieb der anderen Aggregate beeinträchtigt werden würde.

Um diese Nachteile zu vermeiden, ist es in der DE-A- 23 07 550 vorgeschlagen worden, durch Einwirkung auf die Verstelleinrichtung des hydrostatischen Getriebes bei einem von Hand eingeleiteten Schaltvorgang eine Drehzahlanpassung der Kupplungsteile des Schaltgetriebes vorzunehmen. Bei dieser bekannten Bauart, von der im Oberbegriff des Anspruchs 1 ausgegangen wird, umfaßt die Verstelleinrichtung mehrere auf einen Verstellhehel einwirkende Stellkolben.

Der Erfindung liegt die Aufgabe zugrunde, eine Antriebsvorrichtung der gattunsgsgemäßen Bauart mit einfachen Mitteln so auszugestalten, daß das Schaltgetriebe im Betrieb automatisch so geschaltet werden kann. daß der Antriebsmotor im für Leistung oder Energieverbrauch günstigen Drehzahlbereich arbeitet.

Diese Aufgabe wird durch die im Anspruch 1 enthaltenen Merkmale gelöst. Die erfindungsgemäße Ausgestaltung ermöglicht beim Einsatz sowohl eines Lastschaltgetriebes als auch eines einfachen Schaltgetriebes einen automatischen Wechsel der Schaltstufen während des Betriebs, wobei es keinerAnpassung der Antriebsmotordrehzahl an die durch die Schaltstufe bedingte Drehzahländerung des Schaltgetriebes bedarf. Die Anpassung der durch das Schalten bedingten Drehzahländerung erfolgt innerhalb der Getriebeeinheit durch die Regeleinrichtung. Aufgrund dieser Drehzahlanpassung sind ruckfreie Schaltvorgänge bei automatischem Kupplungs- und/oder Schaltbetrieb möglich, wobei das Lastverhalten des Antriebsmotors für die Bestimmung der Schaltzeitpunkte indirekt durch die Leistungsregelung und die erfindungsgemäße Regelung am hydrostatischen Getriebe Berücksichtigung findet. Das automatische Schalten wird durch die Steuereinrichtung gesteuert.

Beim Einsatz eines einfachen Schaltgetriebes werden mittels der Regeleinrichtung die beiden miteinander zu verbindenden Kupplungsteile auf eine gleiche Drehzahl gebracht. Die erfindungsgemäße Ausgestaltung bzw. Anordnung ermöglicht einen ruckfreien Gangwechsel auch beim Einsatz einer starr wirksamen Kupplung, z. B. einer Klauenkupplung, mit der insbesondere größere Antriebskräfte sicher übertragen werden können, wie es bei Antrieben für Baufahrzeuge oder vergleichbare Fahrzeuge und Maschinen gefordert ist.

Da bei der erfindungsgemäßen Ausgestaltung die jeweilige Leistung des Antriebsmotors aufgrund unabhängiger Antriebsmotordrehzahlen beim Schalten im wesentlichen unverändert bleibt, eignet sich die erfindungsgemäße Ausgestaltung insbesondere für solche Anordnungen. bei denen der Antriebsmotor mehrere Antriebsfunktionen gleichzeitig erfüllt. Durch die erfindungssgemäße Ausgestaltung werden die eingangs beschriebenen Nachteile (hoher Krafstoffverbrauch, Antriebsmotorleistungsveränderung) vermieden und der leistungsgserechte Betrieb der weiteren vom Antriebsmotor gleichzeitig angetriebenen Aggregate gawährleistet.

Die erfindungsgemäße Regeleinrichtung stellt sich als ein zusätzliches Regulative dar, das in die Verstelleinrichtung fürdas hydrostatische Getriebe integriert ist Es können folglich Bauteile eingespart werden, weil die Regeleinrichtung auf vorhandene Stellgliederwirkt und somit zusätzliche bzw. doppelte Stellglieder eingespart werden können.

Bei der lösbaren Kupplung kann es sich um eine solche handeln, die innerhalb des Schaltgetriebes jeweils einer Schaltstufe zugeordnet ist, oder es kann sich auch um eine solche handeln. die gemäß Anspruch 2 zwischen dem hydrostatischen Getriebe und der Schaltgetriebe angeordnet ist. Im ersten Fall bedarf es einer gleichen Umfangsgeschwindigkeit der miteinander zu verbindenden Kupplungsteile. Im zweiten Fall bedarf es einer gleichen Drehzahl.

Die Ausgestaltung nach Anspruch 3 führt zu einer erheblichen Vereinfachung der Antriebsvorrichtung durch den Einsatz eines sogenannten Lastschaltgetriebes, weil bei einem solchen eine Kupplung und ein sie steuernder Antrieb entfallen können.

Im Anspruch 4 sind Ausgestaltungsmerkmale enthalten, mit denen sich die vorbeschriebenen Drehzahlen in einfacher und funktionssicherer Weise messen lassen.

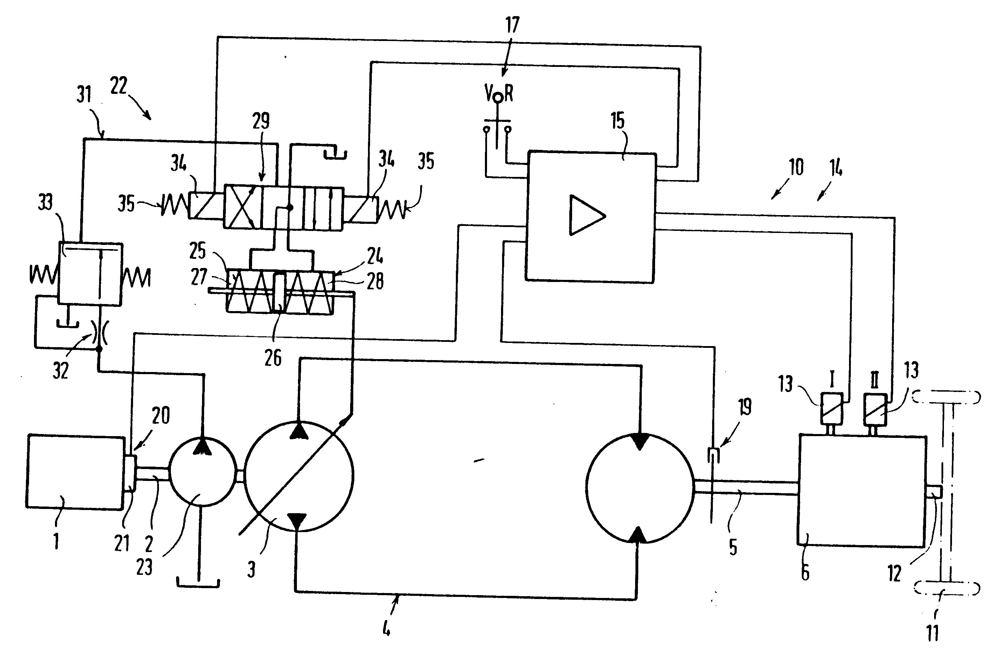

Nachfolgend wird ein Ausführungsbeispiel der Erfindung anhand einer vereinfachten Zeichnung näher beschrieben. Die Zeichnung zeigt einen hydraulischen Schaltplan für den Fahrantrieb eines Radladers. Die aus dem Schaltplan entnehmbare Antriebsvorrichtung umfaßt einen Verbrennungsmotor als Antriebsmotor 1, dessen Antriebswelle 2 die Pumpe 3 eines hydrostatischen Getriebes 4 mit geschlossenem Kreislauf antreibt. Das hydrostatische Getriebe 4 ist durch eine Verbindungswelle 5 mit einem zweigängigen Lastschaltgetriebe 6 verbunden. Die Ausgangsdrehzahl des hydrostatischen Getriebes 4 und die Eingangsdrehzahl des Lastschaltgetriebes 6 sind somit immer gleich. Die antriebsmäßig mit dem andeutungsweise dargestellten Rädern 11 verbundene Ausgangswelle des Lastschaltgetriebes 6 ist mit 12 bezeichnet. Einzelheiten des Lastschaltgetriebes 6 sind nicht dargestellt. Es sind lediglich zwei Schaltantriebe 13 zur Durchführung der Schaltvorgänge sichtbar.

Der Betrieb der Getriebeeinheit wird während der Schaltvorgänge durch eine Regel- und Steuereinrichtung 10, 14 mit einer Elektronik 15 geregelt, die durch elektrische Leitungen mit einem Schalter 17 für Vorwärts- und Rückwärtsfahrt, mit den Schaltantrieben 13, mit einem der Verbindungswelle 5 zugeordneten Drehzahlmesser 19, mit einem den Antriebsmotor 1 zugeordneten Drehzahlmesser 20 und in noch zu beschreibender Weise mit einer allgemein mit 22 bezeichneten Verstelleinrichtung für das hydrostatische Getriebe 4 verbunden ist. Der Drehzahlmesser 20 ist der mit 21 bezeichneten Lichtmaschine des Antriebsmotors 1 zugeordnet. Die Frequenzen der Lichtmaschinenklemme werden in der Antriebsmotordrehzahl proportionale Gleichspannungen umgewandelt.

Das hydrostatische Getriebe 4 ist durch die Verstellvorrichtung 22 in Abhängigkeit von der Drehzahl des Antriebsmotors 1 leistungsgeregelt. Die Verstelleinrichtung 22 umfaßt eine durch die Antriebswelle 2 des Antriebsmotors 1 angetriebene Hilfspumpe 23 unveränderlichen Fördervolumens, die für den Betrieb in eine Förderrichtung eingerichtet ist.

Die Pumpe 3, deren Fördermenge verstellbar ist und die für den Betrieb in beide Förderrichtungen eingerichtet ist, wird durch einen Hydraulikzylinder 24 verstellt, dessen durch Federn 25 mittelzentrierter Doppelkolben 26 durch wahlweise Beaufschlagung der Arbeitsräume 27, 28 verstellbar ist. Hierzu dient ein Wegeventil 29. das jeweils durch Vorwahl der Vorwärts- oder Rückwärtsfahrt am Schalter 17 den einen oder anderen Arbeitsraum 27, 28 mit einer Hydraulikleitung 31 verbindet, in die die Hilfspumpe 23 fördert. In der Hydraulikleitung 31 ist eine sogenannte Druckwaage angeordnet, bestehend aus einer Drossel 32 in der Hydraulikleitung 31 und einem dieser in Strömungsrichtung nachgeordneten Druckregelventil 33, das durch den in der Hydraulikleitung 31 vor der Drossel 32 anstehenden Arbeitsdruck verstellbar ist.

Dem Wegeventil 29 sind als Schaltmagnete Proportionalmagnete 34 zugeordnet, die in bekannter Weise gegen andeutungsweise dargestellte Federn 35 wirksam sind.

Im folgenden wird die Funktion der Antriebsvorrichtung erklärt.

Vor- oder Rückwärtsfahrt wird durch Vorwahl am Schalter 17 vorgewählt. Im Betrieb ist das hydrostatische Getriebe 4 durch die Verstelleinrichtung 22 in Abhängigkeit von der Drehzahl des Antriebsmotors 1 in bekannter Weise leistungsgeregelt. Eine solche Leistungsregelvorrichtung ist in DE-C 22 47 437 beschrieben und dargestellt.

Die Schaltzeitpunkte sind vom Lastverhalten des Antriebsmotors abhängig. Zur Ermittlung des Lastverhaltens werden mittelbar über die Drehzahl der Lichtmaschine 21 die Antriebsmotordrehzahl durch den Drehzahlmesser 20 und die Ausgangsdrehzahl des hydrostatischen Getriebes 4 durch den Drehzahlmesser 19 gemessen und miteinander verglichen. Die Schaltzeitpunkte sind so vorbestimmt, daß der Antriebsmotor immer in einem für Leistung und Kraftstoffverbrauch günstigen Drehzahlbereich arbeitet. Die Kriterien des Lastverhaltens, bei denen zu schalten ist, sind in der elektronischen Steuereinrichtung gespeichert.

Wenn der Antriebsmotor eine vom Lastverhalten abhängige obere Drehzahlgrenze im ersten Gang erreicht, wird automatisch der zweite Gang eingeschaltet. Hierzu werden durch die Steuereinrichtung 14 der Schaltantrieb 13 eingeschaltet und gleichzeitig durch die Regeleinrichtung 10 das sich in einer Endstellung befindliche Wegeventil 29 durch den betreffenden Proportionalmagneten 34 im Sinne einer Verringerung der Beaufschlagung des Doppelkolbens 26 verstellt, wobei der Doppelkolben 26 durch die betreffende Feder 25 in Richtung auf seine Null-Stellung verstellt wird. Hierdurch wird die Fördermenge der Pumpe 3 um ein solches Maß verringert, daß sich die Ausgangsdrehzahl des hydrostatischen Getriebes 4 um ein solches Maß verringert, das der durch die Schaltstufe bedingten Drehzahländerung entspricht. Auf diese Weise kann das Lastschaltgetriebe 6 geschaltet werden, ohne daß die Drehzahl des Antriebsmotors 1 verändert werden muß.

Beim Herunterschalten vom zweiten in den ersten Gang, das im übertragenen Sinne in vergleichbarer Weise erfolgt, wird die Ausgangsdrehzahl des hydrostatischen Getriebes 4 durch eine entgegengesetzte Beaufschlagung des Doppelkolbens 26 (Ausschwenken der Pumpe 3) um das Maß der durch die Schaltstufe bedingten Drehzahländerung vergrößert. Dabei kann die Drehzahl des Antriebsmotors 1 ebenfalls unverändert bleiben.

Der Antriebsmotor 1 treibt gleichzeitig weitere Aggregate des Radladers an, z. B. die Hub- und Schwenkeinrichtung für die Ladeschaufel. Dies ist aus Vereinfachungsgründen nicht beschrieben und dargestellt.

Die Erfindung ist nicht auf das vorbeschriebene Ausführungsbeispiel beschränkt. Im Rahmen der Erfindung ist es möglich, primär- und/oder sekundärgeregelte hydrostatische Getriebe einzusetzen.

## Patentansprüche

1. Fahr-Antriebsvorrichtung für Maschinen und Fahrzeuge, insbesondere solchen mit gleichzeitig anzutreibenden Aggregaten, bevorzugt für Baufahrzeuge, wie Radlader, bestehend aus
a) einem Antriebsmotor (1) und einer von diesem antreibbaren Getriebeeinheit (4,6) mit einem verstellbaren, eine Pumpe (3) und einen Hydromotor aufweisenden hydrostatischen Getriebe (4) und einem diesem nachgeordneten Schaltgetriebe (6);
b) wobei das hydrostatische Getriebe (4) in Abhängigkeit von der Drehzahl des Antriebsmotors (1) veränderlicher Drehzahl durch eine von dem Anstriebsmotor angetriebene Hilfspumpe gespeiste hydraulische Verstelleinrichtung (22) leistungsgeregelt ist,
c) dem hydrostatischen Getriebe (4) eine während des Schaltvorganges wirksame Regeleinrichtung (10) zwecks umgekehrt proportionaler Anpassung der Ausgangsdrehzahl des hydrostatischen Getriebes (4) bzw. der Eingangsdrehzahl des Schaltgetriebes (6) an die durch die Schaltstufe bedingte Drehzahländerung zugeordnet ist,
d) die Regeleinrichtung (10) Meßeinrichtungen für die Ausgangsdrehzahl des hydrostatischen Getriebes (4) zur Betätigung eines Regelgliedes (34) aufweist, welches auf ein Wegeventil (29) für die Verstelleinrichtung (22) wirkt,
e) und einer Steuereinrichtung (14) für das Schalten des Schaltgetriebes,
dadurch gekennzeichnet,
f.) daß für die Leistungsregelung des hydrostatischen Getriebes (4) die Verstelleinrichtung (22) eine Drossel (32), ein Druckregelventil (33) und das Wegeventil (29) aufweist, wobei das Wegeventil als proportional wirksames Druckregelventil (29), an dem das Regelglied (34) angreift, wirksam ist,
g.) daß zur Betätigung des Regelgliedes (34) eine Steuerelektronik (15) vorgesehen ist, h.) daß automatisch gesteuerte Antriebe (13) einer Kupplung und/oder dem Schaltmechanismus des Schaltgetriebes zugeordnet sind i.) und daß die Steuereinrichtung (14) in der Steuerelektronik (15) enthalten ist und das Schaltgetriebe (6) in Abhängigkeit von der Eingangsdrehzahl und dem Drehmoment des hydrostatischen Getriebes (4) automatisch schaltet.

2. Antriebsvorrichtung nach Anspruch 1, dadurch gekennzeichnet, daß die Kupplung zwischen dem hydrostatischen Getriebe (4) und dem Schaltgetriebe (6) angeordnet ist.

3. Antriebsvorrichtung nach Anspruch 1 oder 2, dadurch gekennzeichnet, daß das Schaltgetriebe (6) ein unter Last schaltbares Getriebe ist.

4. Antriebsvorrichtung nach Anspruch 1, dadurch gekennzeichnet, daß der Eingangswelle (2) und der Ausgangswelle (5) des hydrostatischen Getriebes (4) je ein Drehzahlmesser (19,20) zugeordnet ist.

## Claims

1. A propulsion device for machines and vehicles, in particular for those with units to be driven simultaneously and especially for constructional vehicles such as wheeled loaders, comprising
(a) a driving motor (1) and a transmission unit (4, 6) drivable thereby having an adjustable hydrostatic transmission including a pump (3) and a hydraulic motor, and followed by a gear-changing system (6),
(b) the hydrostatic transmission (4) being power-output-controlled, through a hydraulic adjustment device (22) fed by an auxiliary pump driven by the driving motor, in dependence upon the speed of the variable speed driving motor (1),
(c) the hydrostatic transmission (4) has associated with it a control device (10) effective during gear changing for the purpose of inverse proportional matching of the output speed of the hydrostatic transmission (4) or the input speed of the gear-changing system (6) to the change in speed required by the gear change,
(d) the control device (10) has measuring devices for the output speed of the hydrostatic transmission (4) for actuating a control member (34) which acts upon a directional control valve (29) for the adjustment device (22),
(e) and a control device (14) for gear changing the gear-changing system,
characterised in that,
(f) for power output control of the hydrostatic transmission (4), the adjustment device (22) has a throttle (32), a pressure control valve (33) and the directional control valve (29), wherein the directional control valve is effective as a proportionally working pressure control valve (29), on which the control member (34) acts, in that
(g) control electronics (15) for operating the control member (34) are provided, in that
(h) automatically controlled drives (13) are associated with a coupling and/or with the gear changing mechanism of the gear-changing system,
and in that
(i) the control device (14) is comprised within the control electronics (15) and the gear-changing system changes gear automatically in dependence upon the input speed and the torque of the hydrostatic transmission (4).

2. A propulsion device according to claim 1, characterised in that the coupling is arranged between the hydrostatic transmission (4) and the gear-changing system (6).

3. A propulsion device according to claim 1 or claim 2, characterised in that the gear-changing system (6) is a transmission that can be changed underload.

4. A propulsion device according to claim 1, characterised in that the input shaft (2) and the output shaft (5) of the hydrostatic transmission (4) have respective revolution counters (19, 20) associated therewith.

## Revendications

1. Dispositif de propulsion destiné à des machines et véhicules, en particulier à ceux comportant des organes devant être entrainés simultanément, de préférence pour des engins de construction tels que les pelles automotrices, constitué par :
a) un moteur d'entraînement (1) et un ensemble de transmission (4, 6) entraîné par celui-ci et comprenant une transmission hydrostatique (4) présentant une pompe (3) et un moteur hydraulique, et un dispositif de changement de vitesse (6) disposé à la suite de celle-ci;
b) la transmission hydrostatique (4) étant régulée en puissance en fonction de la vitesse de rotation variable du moteur d'entraînement (1) par l'intermédiaire d'un dispositif de réglage hydraulique (22) alimenté par une pompe auxiliaire entraînée par le moteur d'entraînement;
c) un dispositif de réglage (10) actif pendant l'opération de changement de vitesse étant affecté à la transmission hydrostatique (4) dans le but d'adapter de façon inversement proportionnelle la vitesse de rotation de sortie de la transmission hydrostatique (4) respectivement la vitesse de rotation d'entrée du dispositif de changement de vitesse (6);
d) le dispositif de réglage (10) présentant des dispositifs de mesure destinés aux vitesses de rotation de sortie de la transmission hydraulique (4) pour l'actionnement d'un organe de régulation (34) agissant sur une valve d'inversion (29) associée au dispositif de réglage hydraulique (22);
e) et un dispositif de commande (14) destiné au changement de vitesse du dispositif de changement de vitesse;
caractérisé en ce que :
f) le dispositif de réglage (22) comporte, pour la régulation de la puissance de la transmission hydrostatique (22), un étranglement (32), une valve de régulation de pression (33) et la valve d'inversion (29), cette dernière fonctionnant comme une valve de régulation proportionnelle de pression (29) sollicitée par l'organe de régulation (34);
g) une électronique de commande (15) est prévue pour l'actionnement de l'organe de régulation (34);
h) des entraînements (13) commandés automatiquement sont affectés à un accouplement et/ou au mécanisme de changement de vitesse du dispositif de changement de vitesse;
i) le dispositif de commande est intégré dans l'électronique de commande (15) et le dispositif de changement de vitesse (6) change automatiquement de vitesse en fonction de la vitesse de rotation d'entrée ainsi que du couple de rotation de la transmission hydrostatique (4).

2. Dispositif d'entraînement selon la revendication 1, caractérisé en ce que l'accouplement est disposé entre la transmission hydrostatique (4) et le dispositif de changement de vitesse (6).

3. Dispositif d'entraînement selon la revendication 1 ou 2, caractérisé en ce que le dispositif de changement de vitesse (6) est un dispositif de changement de vitesse susceptible de changer de vitesse sous l'influence de la charge.

4. Dispositif d'entraînement selon la revendication 1, caractérisé en ce qu'un dispositif de mesure de vitesse de rotation (19, 20) est affecté à chacun des arbres d'entrée (2) et de sortie (5) de la transmission hydrostatique (4).
